# EUROPEAN PATENT APPLICATION

(11) **EP 2 602 502 A2**
(43) Date of publication of application: **12.06.2013**
(21) Application number: 12195195.8
(22) Date of filing: 03.12.2012
(51) Int. Cl.: F16D 1/02

(54) **Motor shaft extender device**

(30) Priority: 07.12.2011 ES 201131257 U
(71) Applicant: DESARROLLOS EMPRESARIALES VALAR, S.L., 08870 Sitges (Barcelona) (ES)
(72) Inventor: Soler Alvarez, Marina, 08870 SITGES (Barcelona) (ES)
(74) Representative: Ungria López, Javier

(57) **Abstract**

Device intended to extend a motor shaft by its terminal portion, which protrudes through at least one of the extremities of the motor, said device incorporating an extension element that integrates a blind cavity centered in the axial direction, where the terminal portion of the motor shaft is coaxially adjusted; wherein the terminal portion (3') of the motor (4) shaft (3) incorporates a first centered axial perforation (7), located in correspondence with the frontal base (11) of said terminal portion; the bottom (2') of the blind cavity (2) of the extension element (1) incorporates a second centered axial perforation (8) facing the first centered axial perforation; and both centered axial perforations are connected to each other by means of an anchoring element that immobilizes at least in one direction, the relative rotation of the extension element with respect to the motor shaft and the extension element in the axial direction.

## Description

### OBJECT OF THE INVENTION

The present invention, as expressed in the wording of this specification, relates to a motor shaft extender device, which, as its name implies, is intended to extend the output shaft of a motor, essentially electric or hydraulic without ruling out other types, when transmitting its rotational motion to a machine becomes necessary, and in general, to any device requiring said transmission for its operation, so that, in all cases, the extension of the motor shaft is required in order to transmit said rotational motion to the corresponding device correctly.

On the other hand, as is evident, the extender device of the invention is also applicable to output shafts of other motor elements, such as, for example, the output shaft of an hydraulic pump.

### BACKGROUND OF THE INVENTION

Nowadays, when the output shaft of an electric motor needs to be extended in order to transmit its rotational motion to a machine, in whose frame the casing of the aforementioned motor is affixed, a first solution consists in manufacturing the motor shaft set with a more elongated-than-usual design from the beginning.

In order to decrease manufacturing costs, another solution consists in assembling a standard motor coupled to a mechanism acting as the extender of the shaft of the aforementioned motor.

This mechanism is coupled to the motor shaft by means of an internal cavity acting as a centering device between the motor shaft and the extension shaft, in such a way that, in order to make the motor power radial drag effective, a keyway is incorporated to said internal cavity, which is adjusted with the key of the motor shaft, stressing the fact that 1, 2 or 3 radial fixing screws are also incorporated depending on the motor power axially affixing the mechanism to the shaft of the aforementioned motor.

Due to the large number of manufacturers using this system, the manufacturers of transmission elements decided to create a system called "retaining bush" that would be valid for almost all the cases where a shaft extender to transmit the motor power was needed.

This new mechanism is composed by an internal bushing opened longitudinally, which internally has the same diameter than the motor shaft to which it will be coupled to, acting as the centering device between the motor shaft and the extension shaft. Externally, the bushing incorporates a ramp at each extremity thereof, internally, it also incorporates two cylindrical plugs having the same ramp than the bushing and connected to each other by means of several screws, in such a way that, by tightening said screws, an axial displacement effect on the bushing ramp is produced, causing the bushing closure by pressing the motor shaft and the extension shaft as well, so said ramp produces a multiplying effect with respect to the pressuring effort of the screws, causing the two aforementioned shafts to be immobilized radially and axially, and due to the taper effect, both cylindrical plugs are nailed to the internal bushing. This latest mechanism is essentially applicable to keyway-less motor shafts.

Both in the second and in the third assumptions, the total length of the shaft can be excessively long for certain applications.

### DESCRIPTION OF THE INVENTION

With the purpose of reaching the objectives and avoiding the inconveniences mentioned in the previous sections, the invention proposes a motor shaft extender device intended to extend the shaft of a motor by its terminal portion, which protrudes through at least one of the extremities of said motor, being said device of the type that incorporates an extension element formed by a front section and a rear section that integrates a blind cavity centered in an axial direction, where the terminal portion of the motor shaft is adjusted coaxially.

Based on this premise, the device of the invention is **characterized in that**:
- the terminal portion of the motor shaft incorporates a first centered axial perforation, located in correspondence with the frontal base of said terminal portion.
- the bottom of the blind cavity of the extension element incorporates a second centered axial perforation facing the first axial perforation.
- both axial perforations, the first and the second, are connected by means of an anchoring element that immobilizes at least in one direction, the relative rotation of the extension element with respect to the motor shaft and it also immobilizes the extension element in the axial direction.

The anchoring element that immobilizes the extension element axially and rotationally with respect to the motor shaft, said anchoring element comprises a stud that is coupled to threads integrating the first and second axial perforations, established respectively in the frontal base in the terminal portion of the motor shaft and in the extension element.

The device of the invention is also **characterized in that** it incorporates a pair of intermediate washers that make contact against the bottom of the blind cavity of the extension element and against a frontal base interrupted by the first perforation of the motor shaft.

Therefore, the structure presented by the extender device of the invention presents a very simple design and mainly serves to transmit small motor power, highlighting the fact that, normally, the motor shaft always has to rotate in one direction, in such a way that said rotation direction will depend only on whether the stud thread connecting the extension element to the motor shaft is right-hand or left-hand.

The extension element and the motor shaft are connected by means of the threaded stud at both extremities of said extension element and motor shaft, producing a turning and back-turning effect, thus causing them to be immobilized radially and axially, in such a way that this connection depends on the mechanical resistance of the stud.

The intermediate washers, which are put in between the two elements to be connected (the extension element and the motor shaft) present the particularity of producing the same combined effect than a Grower washer and a self-blocking nut. The only purpose of these two washers being incorporated is that if the assembly of the extension element is produced in a three-phase motor, it must be noticed that upon its initial starting for the first time, it could startup in the opposite direction to that of the stud thread direction, which could cause the entire system to loosen, with the consequent damage that this would cause. It should be noted that the motor shaft does not incorporate a key, either.

Among others, the extender of the invention provides the following advantages:
- Simplicity due to the small number of pieces (extension element, stud and two washers).
- The added pieces do not distort the balance of the motor.
- The length of the blind cavity of the extension element and of the axial perforations of the thread is decreased, thereby reducing the length of the extender device to the indispensable minimum for a correct operation. Taking into account that the small deviations in perpendicularity between the original motor shaft and its fastening flange, which always exist, increase due to the length of the shaft extender device, if the total length of the extender device is reduced, the deviations in the extremity of the extender device also decrease, thereby obtaining an improvement in the total quality of the set.

Next, for better comprehension purposes of this specification and making an integral part thereof, a set of drawings are annexed thereto, where by way of non-limiting example the object of the invention has been reproduced:

### BRIEF DESCRIPTION OF THE DRAWINGS

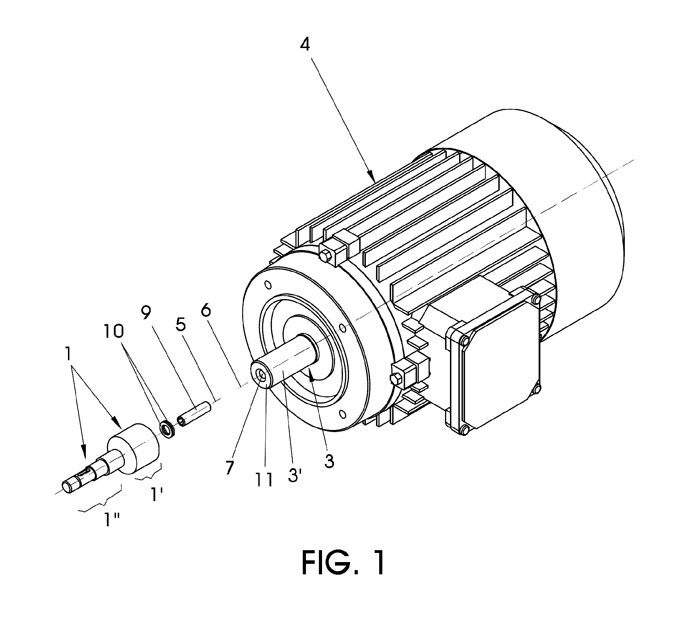

Figure 1. Shows a perspective view of the motor shaft extender device, object of the invention.

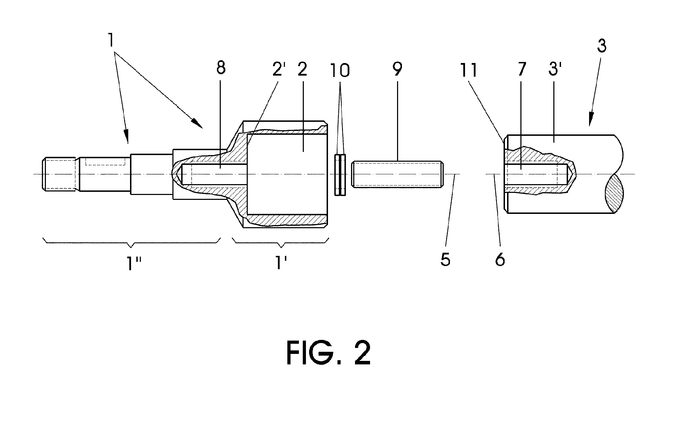

Figure 2. Shows a sectional view of the extender device of the invention.

### BRIEF DESCRIPTION OF THE DRAWINGS

Taking into account the numeration adopted in the figures, the motor shaft extender device contemplates the following nomenclature, which is used in the description:
1. Extension element
1'. Rear section
1 ". Front section
2. Blind cavity
2'. Bottom (frontal base of the extension element)
3. Shaft
3'. Terminal portion
4. Motor
5. Imaginary axis
6. Imaginary axis
7. First centered axial perforation
8. Second centered axial perforation
9. Stud
10. Pair of intermediate washers
11. Frontal base

It comprises an extension element 1, provided with a centered blind cavity 2 in its rear section 1', in which a terminal portion 3' of a motor 4 shaft 3 is embedded.

A front section 1" of the extension element 1 will be connected to a part of an element of a machine or another device to transmit the motion of the motor 4.

Evidently, the shaft 3 of the motor 4 is coaxial to the extension element 1, being both imaginary axes 5-6 arranged in the same axial direction.

On the other hand, the terminal portion 3' of the motor 4 shaft 3 integrates a first centered axial perforation 7, which is threaded and facing a second centered axial perforation 8 and is threaded and arranged at the bottom 2' (frontal base of the extension element) of the centered blind cavity 2 of the extension element 1, said threaded axial perforations 7-8 being supplemented with an anchoring element to immobilize the relative rotation of the extension element 1 with respect to the shaft 3 of the motor 4, at least in one of the rotational directions of said shaft 3 of the motor 4. Said anchoring element also immobilizes the extension element 1 in the axial direction.

For this purpose, said anchoring element comprises a stud 9, which is coupled to the threads made in said first 7 and second 8 centered axial perforations, with the interposition of a pair of intermediate washers 10, which make contact against the bottom 2' (frontal base of the extension element) of the blind cavity 2 of the extension element 1 and against a frontal base 11, interrupted by the first centered axial perforation 7 of the motor 4 shaft 3.

## Claims

1. Motor shaft extender device, which, being intended to extend the shaft of a motor by its terminal portion, which protrudes through at least one of the extremities of said motor and being said device of the type that incorporates an extension element integrating a centered blind cavity in the axial direction, where the terminal portion of the motor shaft is coaxially adjusted;
**is characterized in that:**
- the terminal portion (3') of the motor (4) shaft (3) incorporates a first centered axial perforation (7), located in correspondence with the frontal base (11) of said terminal portion (3');
- the bottom (2') of the blind cavity (2) of the extension element (1) incorporates a second centered axial perforation (8) facing the first centered axial perforation (7);
- both centered axial perforations, the first (7) and the second (8), are connected to each other by means of an anchoring element that immobilizes at least in one direction, the relative rotation of the extension element (1) with respect to the motor (4) shaft (3), and it also immobilizes the extension element (1) in the axial direction.

2. Motor shaft extender device, according to claim 1, **characterized in that** the anchoring element immobilizing the extension element (1) axially and rotationally with respect to the motor (4) shaft (3), said anchoring element comprises a stud (9) coupled to threads integrating the first (7) and second (8) centered axial perforations.

3. Motor shaft extender device, according to any one of the previous claims, **characterized in that** it incorporates a pair of intermediate washers (10) that make contact against the bottom (2') of the blind cavity (2) of the extension element (1) and against a frontal base (11), interrupted by the first centered axial perforation (7) of the motor (4) shaft (3).
